(19) Europäisches Patentamt
European Patent Office
Office européen des brevets

(11) Numéro de publication : **0 419 322 B1**

(12) **FASCICULE DE BREVET EUROPEEN**

(45) Date de publication du fascicule du brevet :
**07.07.93 Bulletin 93/27**

(51) Int. Cl.⁵ : **C03C 1/00, C03C 13/00**

(21) Numéro de dépôt : **90402505.3**

(22) Date de dépôt : **12.09.90**

(54) **Procédé d'élaboration d'un verre destiné à être transformé en fibres continues ou discontinues.**

(30) Priorité : **18.09.89 FR 8912169**

(43) Date de publication de la demande :
**27.03.91 Bulletin 91/13**

(45) Mention de la délivrance du brevet :
**07.07.93 Bulletin 93/27**

(84) Etats contractants désignés :
**AT BE CH DE DK ES FR GB IT LI NL SE**

(56) Documents cités :
**DE-C- 887 399**
**US-A- 3 853 569**
**CHEMICAL ABSTRACTS, vol. 91, 1979, page 337, résumé no. 26038x, Columbus, Ohio, US; & JP-A-78 145 822 (NIPPON SHEET GLASS CO.) 19-12-1978**

(56) Documents cités :
**GLASS AND CERAMICS, vol. 46, no. 3/4, mars/avril 1989, pages 91-92, Plenum Publishing, Corp., New York, US; V.G. GOMOZOVA et al.: "Metallurgical waste in the production of smalt"**
**CHEMICAL ABSTRACTS, vol. 110, 1989, page 330, résumé no. 100447j, Columbus, Ohio, US; & JP-A-63 225 552 (NITTO BOSEKI CO., LTD) 20-09-1988**

(73) Titulaire : **SAINT-GOBAIN RECHERCHE**
**39 quai Lucien Lefranc**
**F-93300 Aubervilliers (FR)**

(72) Inventeur : **Maugendre, Stéphane**
**13, Allée des Bourgognes**
**F-60500 Chantilly (FR)**
Inventeur : **Dubois, Bernard,**
**15, rue Portefoin**
**F-75003 Paris (FR)**

(74) Mandataire : **Breton, Jean-Claude et al**
**SAINT-GOBAIN RECHERCHE 39, quai Lucien Lefranc**
**F-93300 Aubervilliers Cedex (FR)**

EP 0 419 322 B1

## Description

L'invention concerne un procédé d'élaboration d'un verre, obtenu par fusion d'un mélange de matières vitrifiables, selon lequel on règle au niveau désiré son degré d'oxydo-réduction. L'invention vise les verres destinés à être transformés en fibres continues par étirage mécanique ou en fibres discontinues par centrifugation et/ou par étirage au moyen d'un fluide.

Les verres, destinés à être transformés sous forme de fibres, sont élaborés à partir de matières premières naturelles qui contiennent différentes impuretés, en particulier de l'oxyde de fer. Lorsque les conditions d'élaboration ne permettent pas d'obtenir un verre suffisamment oxydé, cette situation est à l'origine de graves inconvénients. Ainsi le rapport fer ferreux/fer ferrique dans le verre fondu va augmenter et provoquer de ce fait une diminution de la conductivité de rayonnement du verre. Cette diminution de la conductivité va se traduire par une augmentation de l'écart existant entre les températures mesurées en deux points déterminés dans le bain de verre. Ce phénomène va entraîner une modification des courants de convection du verre et perturber la conduite du four, tout particulièrement lorsqu'il s'agit d'un four électrique beaucoup plus sensible à la teneur en fer qu'un four à flammes.

Par ailleurs, il est bien connu d'introduire du sulfate de sodium, de calcium ou d'ammonium dans le mélange vitrifiable. Ce composé a pour rôle de faciliter la fusion du mélange et de favoriser l'affinage du verre. Lorsque le verre est insuffisamment oxydé, la capacité de dissolution du sulfate est plus faible. Il s'ensuit que la vitesse de fusion du mélange est ralentie et que cet inconvénient ne peut être compensé que par une augmentation de la témprature dans la zone de fusion. Ceci a pour contrepartie une augmentation de la quantité d'énergie pour fondre le verre et une usure accélérée des réfractaires constituant les parois et la sole du four.

Il faut également souligner que la réduction du verre peut provoquer son dégazage. L'excès du sulfate qu'il contient à l'état dissous se dégage alors sous forme de $SO_2$ et donne naissance à une couche isolante entre le mélange vitrifiable et le verre fondu. Ce phénomène entrave considérablement la fusion.

Il est aussi connu que les fibres obtenues à partir d'un verre insuffisamment oxydé présentent des propriétés mécaniques amoindries. Le document intitulé : "The effect of batch carbon on the strength of E-glass fibres" (Glass Technology, vol. 10 - n° 3, June 1969 - p. 90-91) met clairement en évidence ce phénomène à propos du verre E, mondialement utilisé pour fabriquer des fibres continues.

Le maintien d'un degré d'oxydation minimum est donc impératif pour assurer le bon fonctionnement des dispositifs d'élaboration du verre et l'obtention des qualités requises pour les fibres qui en résultent.

Pour éviter les inconvénients, décrits précédemment, il est d'usage d'utiliser des matières premières contenant peu d'impuretés, notamment peu de fer. Ces matières sont extraites souvent loin des usines qui les emploient, ce qui majore d'autant leur coût. Il est également d'usage d'éviter d'introduire en trop grandes quantités dans le mélange vitrifiable des produits susceptibles de réduire le verre ; cette précaution limite en particulier la quantité de déchets de fabrication, formés par exemple de fibres revêtues de produits organiques, susceptible d'être recyclée. Le seul moyen économique, connu à ce jour, de recycler une importante quantité de déchets est d'augmenter considérablement le taux de sulfate dans le mélange vitrifiable. Cette possibilité se heurte actuellement aux normes à respecter pour limiter la pollution atmosphérique.

La présente invention a pour objet un procédé d'élaboration d'un verre, destiné à être transformé en fibres continues ou discontinues, qui permet de régler le degré d'oxydation dudit verre en évitant les inconvénients rencontrés habituellement dans un tel procédé.

La présente invention a notamment pour objet un procédé d'élaboration d'un verre, qui permet d'utiliser des matières premières vitrifiables moins pures que celles qui sont habituellement employées dans l'industrie de la fibre de verre, sans réduire la capacité de production du four ou la qualité du verre produit et en maintenant les émanations polluantes dans des limites acceptables.

La présente invention a en particulier pour objet un procédé d'élaboration d'un verre, qui permet de fondre un mélange vitrifiable formé de matières premières naturelles et de déchets de produits à base de verre, en maintenant la capacité de production du four et la qualité du verre produit. Ces déchets recyclés peuvent être constitués aussi bien de fibres de verre que de calcin obtenu par broyage d'emballages de verre ou de vitrages.

Ces objets sont atteints grâce à un procédé d'élaboration d'un verre, destiné à être transformé en fibres continues ou discontinues contenant du fer selon une teneur qui, exprimée en pourcentage pondéral de $Fe_2O_3$, demeure égale ou inférieure à environ 1 %, selon lequel on fond un mélange de produits vitrifiables et qui consiste à régler le degré d'oxydation du verre obtenu en incorporant dans le mélange au moins deux oxydants, l'un d'entre eux étant un nitrate inorganique, l'autre étant au choix un composé oxygéné du manganèse dans lequel cet élément se présente sous un état d'oxydation supérieur à 2, le bichromate de potassium et/ou l'oxyde cérique, de manière à maintenir le rapport $FeO/Fe_2O_3$ à une valeur égale ou inférieure à environ 0,4.

La nature et la teneur des oxydants utilisés dans le cadre de l'invention sont choisies, de préférence, de manière à maintenir la valeur du rapport $FeO/Fe_2O_3$ entre environ 0,2 et environ 0,3.

2

Par produits vitrifiables, il faut entendre aussi bien les matières premières naturelles vitrifiables, que les déchets à base de fibres de verre ou le calcin provenant du broyage d'emballages de verre ou de vitrages.

Le composé oxygéné de manganèse est généralement une matière première naturelle apportant de préférence $MnO_2$ ou $Mn_2O_3$.

Il a été en effet découvert que l'incorporation dans le mélange vitrifiable d'au moins un nitrate, tel que par exemple le nitrate de sodium, de calcium ou d'ammonium, et celle d'au moins un autre oxydant, tel que le bioxyde de manganèse, le bichromate de potassium ou l'oxyde cérique, permet de disposer d'une capacité d'oxydation nettement supérieure à celle procurée par les moyens traditionnellement employés dans l'élaboration des verres utilisés dans les industries de la fibre de verre. Ces moyens consistent à introduire un ou plusieurs sulfates dans le mélange comme le décrit à titre d'exemple le document précité.

La capacité d'oxydation de l'association des oxydants dans le procédé selon l'invention est telle qu'elle permet de réduire considérablement le taux de sulfate dans le mélange, voire même de l'éliminer. Ainsi, grâce à l'invention, les inconvénients liés à la présence de sulfate sont-ils fortement atténués ou même supprimés.

Les associations d'oxydants définies par l'invention, qui présentent à la fois une excellente capacité d'oxydation et le coût le plus faible, sont formées de nitrate de sodium et/ou de nitrate de potassium et/ou de nitrate de calcium et de bioxyde de manganèse.

Il a été déterminé que le contrôle du degré d'oxydation du verre peut s'effectuer de manière satisfaisante en introduisant dans le mélange vitrifiable environ 0,05 à environ 6 parties en poids d'oxydants pour 100 parties en poids dudit mélange.

La quantité d'oxydants nécessaire est de préférence comprise entre environ 1 et environ 3 parties en poids pour 100 parties en poids de mélange vitrifiable.

Selon le procédé de l'invention la teneur en nitrate (s) est généralement comprise entre environ 0,02 et environ 3 parties en poids pour 100 parties en poids de mélange vitrifiable. Afin de réduire la quantité de gaz de formule $NO_x$ dégagée lors de la fusion et donc de réduire les émanations polluantes, il est préférable de limiter la teneur en nitrate à environ 1,5 parties en poids.

La teneur totale en nitrate est généralement comprise entre environ 0,5 partie en poids et environ 1,5 parties en poids.

Le procédé selon l'invention s'applique aux différents verres susceptibles d'être transformés en fibres discontinues selon les différents procédés connus, tel celui qui consiste à obtenir des fibres par centrifugation du verre fondu contenu dans un dispositif rotatif muni d'orifices à sa périphérie.

Ainsi, le procédé selon l'invention peut s'appliquer, par exemple en introduisant les oxydants dans un mélange calculé de manière à obtenir un verre dont la composition chimique est définie par les limites pondérales suivantes : $SiO_2$ : 61 à 72 % - $Al_2O_3$ : 2 à 8 % - CaO : 5 à 10 % - MgO : 0 à 5 % - $Na_2O$ : 13 à 17 % - $K_2O$ : 0 à 2 % - $B_2O_3$ : 0 à 7%-$F_2$ : 0 à 1,5 % - BaO : 0 à 2,5 % - fer total exprimé sous forme de $Fe_2O_3$ : < à 1 % ; les impuretés apportées par les différentes matières vitrifiables et comprenant d'autres éléments, demeurent inférieures à 2 %. Du fait de l'adjonction des oxydants selon l'invention, le verre final est susceptible de contenir, en outre, des oxydes de manganèse, de chrome et/ou de cérium. La teneur pondérale de ces derniers oxydes peut atteindre environ 3 %.

Le procédé selon l'invention s'applique aux différents verres susceptibles d'être transformés en fibres continues par étirage mécanique du verre fondu.

Le procédé selon l'invention peut s'appliquer, par exemple, en introduisant les oxydants dans un mélange calculé de manière à obtenir un verre dont la composition chimique est définie par les limites pondérales suivantes : $SiO_2$ : 52 à 58 % - $Al_2O_3$ : 12 à 16 % - CaO et éventuellement MgO : 19 à 25 % - $B_2O_3$ : 4 à 8 % - $F_2$ : 0 à 1,5 % -oxydes alcalins : < à 2 % - fer total exprimé sous forme de $Fe_2O_3$ : < à 1 % ; les impuretés apportées par les matières vitrifiables et comprenant d'autres éléments, demeurent inférieures à 2 %. Comme dans l'exemple précédent le verre final est susceptible de contenir des oxydes de manganèse, de chrome et/ou de cérium ; la teneur pondérale de ces oxydes peut atteindre environ 3 %.

Dans le cas de verres comprenant peu d'oxydes alcalins, il est préférable d'utiliser des nitrates autres que les nitrates alcalins, par exemple le nitrate de calcium.

Les avantages de l'invention seront mieux appréciés à travers les différents résultats décrits ci-après. Le verre choisi pour illustrer l'invention est un verre utilisé pour fabriquer des fibres discontinues, la composition chimique duquel ayant pour base les constituants ci-après selon les limites pondérales suivantes : $SiO_2$ : 64 % - $Al_2O_3$ : 3,3 % - CaO : 7 % - MgO : 2,9 % - $Na_2O$ : 15,8 % - $K_2O$ : 1,4 % - $B_2O_3$ : 4,5 %. Ces différents pourcentages sont susceptibles de varier en fonction de la teneur en fer dans le verre final et de la teneur en oxydes apportés par les oxydants introduits dans le mélange.

Le tableau I, en annexe, rassemble les résultats mesurés sur des verres élaborés dans un four dont le mode de chauffage est électrique. Les verres n° 1 à 8 présentent une composition chimique très proche de celle indiquée ci-dessus. La marche des fours électriques étant très sensible à la teneur en fer et surtout à la

3

teneur en FeO, les verres étudiés contiennent moins de 0,15 % de fer total, exprimé sous la forme $Fe_2O_3$.

Les verres n° 1 à 8 sont élaborés à partir de mélanges vitrifiables contenant une quantité croissante de déchets de fibres de verre. Ces déchets sont formés des résidus de fabrication broyés et séchés avant d'être incorporés dans le mélange. Ces mélanges ne contiennent pas de sulfate ajouté volontairement sous forme de matière première, comme par exemple le sulfate de sodium. Les verres obtenus peuvent néanmoins contenir un peu de $SO_3$ provenant le cas échéant des déchets recyclés, si ces derniers sont issus de verres élaborés traditionnellement.

Ces mélanges ne contiennent pas les oxydants préconisés par l'invention. Cette série de verres sert en quelque sorte de référence ; elle montre dans quelle mesure l'introduction de déchets provoque la réduction du verre. L'état plus ou moins réduit du verre est apprécié à travers la mesure du rapport $FeO/Fe_2O_3$.

Le tableau II, en annexe, présente les résultats obtenus sur des verres élaborés de la même manière. La série des verres n° 6 à 13 montre l'influence de l'ajout d'un seul oxydant, un nitrate, dans un mélange contenant des déchets, sur l'état d'oxydo-réduction du verre obtenu.

L'introduction d'une teneur progressivement croissante en nitrate dans le mélange ne permet de diminuer qu'assez lentement le rapport $FeO/Fe_2O_3$. Il faut introduire au moins 1,5 % de $NaNO_3$ pour neutraliser l'effet réducteur provoqué par la présence de 10 % de déchets (comparaison des verres n° 1 et 13).

Le rapport $FeO/Fe_2O_3$ reste nettement supérieur à 0,5 alors qu'il est égal ou inférieur à environ 0,3 pour un verre élaboré à partir d'un mélange classique, avec sulfate mais sans déchets.

Il ressort de ces essais que la capacité d'oxydation du nitrate est faible.

Le tableau III, en annexe, expose les résultats obtenus sur des verres élaborés en four électrique comme les verres précédents. Cette série montre l'influence d'un oxydant, tel que $MnO_2$, sur le degré d'oxydation du verre obtenu.

La série des verres n° 14 à 18 enseigne que $MnO_2$ n'a que peu d'influence sur le rapport $FeO/Fe_2O_3$ jusqu'à une teneur d'au moins 2 %. Le verre n° 18 montre qu'à partir de 3 %, $MnO_2$ a un effet marqué, cette observation devant être pondérée par le fait que la quantité de déchets n'est que de 5 %.

Le maintien du rapport $FeO/Fe_2O_3$ à une valeur inférieure à 0,3 pourra être obtenu par l'action de $MnO_2$ seul, sous réserve de l'introduire dans le mélange selon un pourcentage qui sera élevé dès qu'il s'agira d'oxyder un mélange susceptible de conduire à un verre très réduit. Ceci est difficilement acceptable en raison de la majoration du coût du mélange que cela entraîne, voire même de la modification indésirable de certaines propriétés du verre qui en résulte.

L'invention a permis de mettre en évidence que l'action conjointe d'au moins deux oxydants, l'un se décomposant à basse température (nitrate), l'autre ($Mn_xO_y$, $CeO_2$, $K_2Cr_2O_7$) se décomposant à une température plus élevée que la précédente se traduit par une capacité d'oxydation insoupçonnée.

En effet, il a été découvert que la capacité d'oxydation d'un mélange de ces deux sortes d'oxydants est supérieure, à proportions identiques, à celle observée en utilisant un seul d'entre eux. Les exemples suivants vont permettre d'illustrer cette affirmation.

Le tableau IV correspond à une série de verres fondus dans un four dont la sole est munie d'électrodes et obtenus à partir d'un mélange vitrifiable comprenant un sable particulièrement impur. Outre $SiO_2$, ce sable apporte dans le verre des teneurs relativement élevées de $Al_2O_3$, CaO et $Na_2O$ ; il apporte surtout une quantité importante de fer. Ceci explique la teneur en fer total des verres n° 19 à 23.

Le verre n° 19 est élaboré à partir d'un mélange contenant du sulfate de sodium et présente un rapport $FeO/Fe_2O_3$ normal pour un tel mélange. Du fait de la teneur en fer total, le taux de FeO est donc de l'ordre de 1500 ppm ; en conséquence, la conductivité de rayonnement du verre diminue fortement, ce qui se traduit par une augmentation de la température de la sole et de la gorge du four électrique.

Les verres n° 20 à 23 illustrent l'invention. Le rapport $FeO/Fe_2O_3$ tombe immédiatement à des valeurs très basses pour une teneur totale en oxydants qui n'excède pas 2 %. Pour les verres n° 22 et 23 le taux de FeO est de l'ordre de 500 ppm et permet de retrouver des températures de sole et de gorge habituellement mesurées dans un four électrique fonctionnant normalement.

Le tableau V illustre l'invention dans la possibilité qu'elle offre de recycler des déchets en maintenant des conditions de fonctionnement correctes pour le four électrique. Les verres n° 14 et 8 sont pris comme référence pour des mélanges comprenant respectivement 5 et 10 % de déchets. Les différents mélanges vitrifiables sont réalisés à partir des matières premières habituellement employées pour la fusion électrique, le verre fondu ne contenant pas plus de 0,15 % de fer total.

La comparaison des verres n° 24, 25, 26 à 29 avec ceux figurant dans les tableaux II et III montre l'intérêt de l'invention par rapport aux mélanges ne comportant qu'un seul oxydant. Le rapport $FeO/Fe_2O_3$ obtenu avec 3 % $MnO_2$ et 5 % de déchets (verre n° 18) comparé à celui obtenu avec également 3 % d'oxydants mais deux fois plus de déchets (verre n° 29) est révélateur des capacités d'oxydation offertes par l'invention.

Grâce à la présente invention, il est possible d'introduire dans le mélange vitrifiable jusqu'à 20 % en poids de déchets formés de produits à base de fibres de verre et d'obtenir un verre dont le degré d'oxydo-réduction permet d'assurer un fonctionnement normal des fours de fusion et de maintenir la qualité des fibres qui en sont issues.

Dans le domaine des verres destinés à être transformés en fibres discontinues, il est possible, grâce à la présente invention, de réaliser un mélange vitrifiable composé de matières premières naturelles et de déchets de verre, la composition chimique de ces derniers étant différente de celle du verre qui résultera de la fusion du mélange. Ainsi, le verre recyclé pourra-t-il provenir de déchets de fabrication de fibres continues, voire même de calcin obtenu par broyage de bouteilles ou de vitrages. La composition du mélange des matières premières naturelles sera bien évidemment calculée en conséquence.

Dans le cas de calcin de bouteilles ou de vitrages, il est même possible de recycler des verres dont le rapport $FeO/Fe_2O_3$ est supérieur à 0,4.

Un verre, dont la composition correspond à celle du verre choisi précédemment pour illustrer l'invention, a été obtenu à partir d'un mélange comprenant 59,4 % d'un calcin de bouteilles dont la composition moyenne est la suivante : $SiO_2$ : 71,15 % - $Al_2O_3$, : 2,00 % - $Na_2O$ : 12,90 % - $K_2O$ : 0,70 % - $CaO$ : 10,10 % - $MgO$ : 1,80 % - $Fe_2O_3$ : 0,34 % - $SO_3$ : 0,23 % - $B_2O_3$ : 0,33 %.

Le rapport $FeO/Fe_2O_3$, du verre obtenu a été maintenu à une valeur inférieure à 0,3 grâce à la présence dans le mélange de 0,4 % de $MnO_2$ et de 0,3 % de $NaNO_3$.

Tous les verres cités à titre d'exemples ont été élaborés à partir de mélanges dénués de sulfate en tant que matière première ajouté volontairement. Il est bien évident qu'il est possible d'ajouter ce composé dans le cadre du procédé selon l'invention, sous réserve de pouvoir maintenir les émanations polluantes dans des limites acceptables.

## TABLEAU I

| Verre | N° 1 | N° 2 | N° 3 | N° 4 | N° 5 | N° 6 | N° 7 | N° 8 |
|---|---|---|---|---|---|---|---|---|
| Déchets (%) | 0 | 1 | 2 | 3 | 4 | 5 | 7 | 10 |
| $FeO/Fe_2O_3$ | 0,56 | 0,60 | 0,63 | 0,64 | 0,65 | 0,69 | 0,68 | 0,74 |
| Fer total (en % de $Fe_2O_3$) | 0,12 | 0,12 | 0,12 | 0,09 | 0,10 | 0,10 | 0,10 | 0,10 |

## TABLEAU II

| : Verre | : N° 6 | : N° 9 | : N° 10 | : N° 11 | : N° 12 | : N° 13 : |
|---|---|---|---|---|---|---|
| : Déchets (%) | : 5 | : 5 | : 5 | : 5 | : 5 | : 10 : |
| : $NaNO_3$ (%) | : 0 | : 0,2 | : 0,4 | : 0,8 | : 1 | : 1,5 : |
| : $FeO/Fe_2O_3$ | : 0,69 | : 0,67 | : 0,65 | : 0,63 | : 0,60 | : 0,59 : |
| : Fer total (en % de $Fe_2O_3$) | : 0,10 | : 0,10 | : 0,10 | : 0,10 | : 0,10 | : 0,10 : |

## TABLEAU III

| : Verre | : N° 14 | : N° 15 | : N° 16 | : N° 17 | : N° 18 : |
|---|---|---|---|---|---|
| : Déchets (%) | : 5 | : 5 | : 5 | : 5 | : 5 : |
| : $MnO_2$ (%) | : 0 | : 0,5 | : 0,8 | : 2 | : 3 : |
| : $FeO/Fe_2O_3$ | : 0,58 | : 0,59 | : 0,62 | : 0,52 | : 0,11 : |
| : Fer total (en % de $Fe_2O_3$) | : 0,12 | : 0,10 | : 0,11 | : 0,12 | : 0,12 : |

## TABLEAU IV

| Verre | N° 19 | N° 20 | N° 21 | N° 22 | N° 23 |
|---|---|---|---|---|---|
| $Na_2SO_4$ (%) | 0,4 | – | – | – | – |
| $MnO_2$ (%) | – | 0,5 | 0,8 | 0,8 | 1,5 |
| $NaNO_3$ (%) | – | 0,5 | 0,5 | 1 | 0,5 |
| $FeO/Fe_2O_3$ | 0,30 | 0,16 | 0,13 | 0,11 | 0,08 |
| Fer total (en % de $Fe_2O_3$) | 0,50 | 0,48 | 0,49 | 0,50 | 0,49 |

## TABLEAU V

| : Verre | : N°14 | : N°24 | : N°25 | : N° 8 | : N°26 | : N°27 | : N°28 | : N°29 : |
|---|---|---|---|---|---|---|---|---|
| : Déchets (%) | : 5 | : 5 | : 5 | :10 | :10 | :10 | :10 | :10 : |
| :$MnO_2$ (%) | : − | : 0,8 | : 1 | : − | : 1 | : 1 | : 1 | : 1,5 : |
| :$NaNO_3$ (%) | : − | : 1 | : 1 | : − | : 1 | : 1,5 | : 2 | : 1,5 : |
| :$FeO/Fe_2O_3$ | : 0,58 | : 0,18 | : 0,08 | : 0,74 | : 0,53 | : 0,44 | : 0,47 | : 0,15 : |
| :Fer total :(en % de : $Fe_2O_3$) | : 0,12 | : 0,12 | : 0,12 | : 0,10 | : 0,12 | : 0,12 | : 0,12 | : 0,12 : |

## Revendications

1. Procédé d'élaboration d'un verre destiné à être transformé en fibres continues ou discontinues, contenant du fer selon une teneur qui, exprimée en pourcentage pondéral de $Fe_2O_3$, demeure égale ou inférieure à environ 1%, selon lequel on fond un mélange de produits vitrifiables qui consiste à régler le degré d'oxydation du verre obtenu en incorporant dans le mélange au moins deux oxydants, l'un d'entre eux étant un nitrate inorganique, l'autre étant au choix un composé oxygéné du manganèse dans lequel est cet élément se présente sous un état d'oxydation supérieur à 2, le bichromate de potassium et/ou l'oxyde cérique, de manière à maintenir le rapport $FeO/Fe_2O_3$ à une valeur égale ou inférieure à environ 0,4.

2. Procédé selon la revendication 1, **caractérisé en ce que** la nature et la teneur des oxydants sont choisies de manière à maintenir la valeur du rapport $FeO/Fe_2O_3$ entre environ 0,2 et environ 0,3.

3. Procédé selon l'une des revendications 1 et 2, **caractérisé en ce qu'**on incorpore dans le mélange du nitrate de sodium et/ou du nitrate de calcium ainsi que du bioxyde de manganèse.

4. Procédé selon l'une des revendications précédentes, **caractérisé en ce que** pour 100 parties en poids de mélange la quantité d'oxydants introduite est comprise entre environ 0,05 et environ 6 parties en poids, et de préférence de environ 1 à environ 3 parties en poids.

5. Procédé selon la revendication 4, **caractérisé en ce que** la teneur en nitrate (s) est comprise entre environ 0,02 et 3 parties en poids pour 100 parties en poids de mélange et de préférence de environ 0,5 à environ 1,5 partie en poids.

6. Procédé selon l'une des revendications précédentes, **caractérisé en ce que** les oxydants sont incorporés à un mélange vitrifiable dans lequel l'apport de sulfate, sous la forme d'une matière première contenant plus de 90 % de ce composé, est nul.

7. Procédé selon l'une quelconque des revendications précédentes, **caractérisé en ce que** les oxydants sont introduits dans un mélange calculé de manière à obtenir un verre dont la composition chimique pondérale est définie par les limites suivantes :
   - $SiO_2$ : 61 à 72 % - $Al_2O_3$ : 2 à 8 % - CaO : 5 à 10 % - MgO 0 à 5 % - $Na_2O$ : 13 à 17 % - $K_2O$ : 0 à 2 % - $B_2O_3$ : 0 à 7 % $F_2$ : 0 à 1,5 % - BaO : 0 à 2,5 % - $Fe_2O_3$ (inférieur à) : 1%
   - impuretés (inférieur à) : 2 % ; le verre final étant susceptible de contenir en outre des oxydes de manganèse, de chrome et/ou de cérium provenant desdits oxydants.

8. Procédé selon la revendication 7, **caractérisé en ce que** le mélange est calculé de manière à obtenir un verre dont la teneur pondérale en oxydes de manganèse, de chrome et/ou de cérium peut atteindre la valeur d'environ 3 %.

9. Procédé selon l'une des revendications 1 à 6, **caractérisé en ce que** les oxydants sont introduits dans un mélange calculé de manière à obtenir un verre dont la composition chimique est définie par les limites pondérales suivantes :
   - $SiO_2$ : 52 à 58 % - $Al_2O_3$ : 12 à 16 % - CaO et éventuellement MgO : 19 à 25 % - $B_2O_3$ : 4 à 8 % - $F_2$ : 0 à 1,5 % - $R_2O$ (inférieur à) : 2 % - $Fe_2O_3$ (inférieur à) : 1 % - impuretés (inférieur à) : 2 % ; le verre final étant susceptible de contenir en outre des oxydes de manganèse, de chrome et/ou de cérium provenant desdits oxydants.

10. Procédé selon la revendication 9, **caractérisé en ce que** le mélange est calculé de manière à obtenir un verre dont la teneur pondérale en oxydes de manganèse, de chrome et/ou de cérium peut atteindre la valeur d'environ 3 %.

11. Procédé selon l'une des revendications 7 à 10, **caractérisé en ce que** les oxydants sont introduits dans un mélange qui comprend des matières premières naturelles vitrifiables et des fibres de verre provenant de déchets de fabrication.

12. Procédé selon l'une des revendications 7 et 8, **caractérisé en ce que** les oxydants sont incorporés à un mélange de produits vitrifiables comprenant des matières premières naturelles vitrifiables et du calcin résultant du broyage d'emballages de verre et/ou de vitrages.


**Patentansprüche**

1. Verfahren zur Herstellung eines Glases, aus dem diskontinuierliche oder kontinuierliche Fasern hergestellt werden sollen und das, in Gewichtsprozent $Fe_2O_3$ ausgedrückt, einen Eisenanteil enthält, der kleiner oder gleich etwa 1 % ist, gemäß welchem ein Gemenge von Glasbildnern geschmolzen wird und das aus der Einstellung des Oxidationsgrades des hergestellten Glases besteht, indem zu dem Gemenge wenigstens zwei Oxidationsmittel, wobei eines ein anorganisches Nitrat und das andere wahlweise eine sauerstoffhaltige Manganverbindung, in der dieses Element eine Oxidationszahl von über 2 aufweist, Kaliumdichromat und/oder Ceroxid ist, derart zugegeben werden, daß das Verhältnis von $FeO/Fe_2O_3$ kleiner oder gleich etwa 0,4 bleibt.

2. Verfahren nach Anspruch 1, **dadurch gekennzeichnet,** daß Art und Anteil der Oxidationsmittel derart ausgewählt sind, daß das Verhältnis von $FeO/Fe_2O_3$ zwischen etwa 0,2 und etwa 0,3 bleibt.

3. Verfahren nach Anspruch 1 oder 2, **dadurch gekennzeichnet,** daß zu dem Gemenge Natriumnitrat und/oder Calciumnitrat sowie Mangandioxid zugegeben werden.

4. Verfahren nach einem der vorhergehenden Ansprüche, **dadurch gekennzeichnet,** daß auf 100 Gewichtsteile Gemenge die zugegebene Oxidationsmittelmenge zwischen etwa 0,05 und etwa 6 und vorzugsweise etwa 1 bis etwa 3 Gewichtsteile beträft.

5. Verfahren nach Anspruch 4, **dadurch gekennzeichnet,** daß der Anteil an Nitrat/en zwischen etwa 0,02 und 3 und vorzugsweise etwa 0,5 bis etwa 1,5 Gewichtsteile auf 100 Gewichtsteile Gemenge beträft.

6. Verfahren nach einem der vorhergehenden Ansprüche, **dadurch gekennzeichnet,** daß die Oxidationsmittel zu einem glasbildenden Gemenge gegeben werden, dem kein Sulfat in Form eines mehr als 90 % dieser Verbindung enthaltenden Rohstoffs zugesetzt ist.

7. Verfahren nach einem der vorhergehenden Ansprüche, **dadurch gekennzeichnet,** daß die Oxidationsmittel zu einem Gemenge gegeben werden, welches derart berechnet ist, daß ein Glas hergestellt wird, dessen chemische Gewichtszusammensetzung durch die folgenden Grenzwerte festgeleft ist: $SiO_2$: 61 bis 72 %; $Al_2O_3$: 2 bis 8 %; CaO: 5 bis 10 %; MgO: 0 bis 5 %; $Na_2O$: 13 bis 17 %; $K_2O$: 0 bis 2 %; $B_2O_3$: 0 bis 7 %; $F_2$: 0 bis 1,5 %; BaO: 0 bis 2,5 %; $Fe_2O_3$ (weniger als): 1 % und Verunreinigungen (weniger als): 2 %, wobei das fertige Glas außerdem noch Oxide des Mangans, des Chroms und/oder des Cers enthalten kann, die in den Oxidationsmitteln vorhanden sind.

8. Verfahren nach Anspruch 7, **dadurch gekennzeichnet,** daß das Gemenge derart berechnet ist, daß ein Glas hergestellt wird, dessen Gewichtsanteil an Oxiden des Mangans, des Chroms und/oder des Cers etwa 3 % erreichen kann.

9. Verfahren nach einem der Ansprüche 1 bis 6, **dadurch gekennzeichnet,** daß die Oxidationsmittel zu einem Gemenge gegeben werden, welches derart berechnet ist, daß ein Glas hergestellt wird, dessen chemische Gewichtszusammensetzung durch die folgenden Grenzwerte festgelegt ist: $SiO_2$: 52 bis 58 %; $Al_2O_3$: 12 bis 16 %; CaO und gegebenenfalls MgO: 19 bis 25 %; $B_2O_3$: 4 bis 8 %; $F_2$: 0 bis 1,5 %; Alkalioxide $R_2O$ (weniger als): 2 %; $Fe_2O_3$ (weniger als): 1 % und Verunreinigungen (weniger als): 2 %, wobei das fertige Glas außerdem noch Oxide des Mangans, des Chroms und/oder des Cers enthalten kann, die in den Oxidationsmitteln vorhanden sind.

10. Verfahren nach Anspruch 9, **dadurch gekennzeichnet,** daß das Gemenge derart berechnet ist, daß ein Glas hergestellt wird, dessen Gewichtsanteil an Oxiden des Mangans, des Chroms und/oder des Cers etwa 3 % erreichen kann.

11. Verfahren nach einem der Ansprüche 7 bis 10, **dadurch gekennzeichnet,** daß die Oxidationsmittel zu einem Gemenge gegeben werden, das glasbildende Naturrohstoffe und Glasfasern enthält, die aus Produktionsabfällen herrühren.

12. Verfahren nach Anspruch 7 oder 8, **dadurch gekennzeichnet,** daß die Oxidationsmittel zu einem Gemenge aus glasbildenden Stoffen gegeben werden, das glasbildende Naturrohstoffe und Bruchglas enthält, das aus der Zerkleinerung von Glasbehältnissen und/oder Verglasungen herrührt.

## Claims

1. Process of production of a glass intended to be transformed into continuous or staple fibres, containing iron in a content which, expressed in percentage by weight of $Fe_2O_3$, is equal to or less than about 1%, according to which a mixture of vitrifiable products is melted which consists in regulating the degree of oxidation of the glass obtained by incorporating in the mixture at least two oxidizing agents, one of which is an inorganic nitrate, the other being, according to preference, an oxidized compound of manganese in which this element is in a state of oxidation greater than 2, potassium dichromate and/or ceric oxide, to maintain the $FeO/Fe_2O_3$ ratio at a value equal to or less than approximately 0.4.

2. Process according to Claim 1, characterised in that the nature and the content of the oxidizing agents are selected so as to maintain the value of the $FeO/Fe_2O_3$ ratio between approximately 0.2 and approximately 0.3.

3. Process according to one of Claims 1 and 2, characterised in that sodium nitrate and/or calcium nitrate as well as manganese dioxide are incorporated in the mixture.

4. Process according to one of the preceding claims, characterised in that for 100 parts by weight of mixture, the amount of oxidizing agents introduced is between approximately 0.05 and approximately 6 parts by weight, and preferably from approximately 1 to approximately 3 parts by weight.

5. Process according to Claim 4, characterised in that the nitrate content (s) is between approximately 0.02 and 3 parts by weight per 100 parts by weight of mixture and preferably from approximately 0.5 to approximately 1.5 parts by weight.

6. Process according to one of the preceding claims, characterised in that the oxidizing agents are incorporated in a vitrifiable mixture in which the input of sulphate, in the form of a raw material containing more than 90% of this compound, is zero.

7. Process according to any one of the preceding claims, characterised in that the oxidizing agents are introduced in a mixture calculated to obtain a glass of which the chemical composition by weight is defined by the following limits: $SiO_2$: 61 to 72% - $Al_2O_3$: 2 to 8% - CaO: 5 to 10% - MgO: 0 to 5% - $Na_2O$: 13 to 17% - $K_2O$: 0 to 2% - $B_2O_3$: 0 to 7% - $F_2$: 0 to 1.5% - BaO: 0 to 2.5% - $Fe_2O_3$ (less than): 1% - impurities (less than): 2%; the final glass being able to contain, further, manganese oxide, chromium oxide and/or cerium oxide coming from the said oxidizing agents.

8. Process according to Claim 7, characterised in that the mixture is calculated to obtain a glass of which the content by weight of manganese oxide, chromium oxide and/or cerium oxide can reach the value of approximately 3%.

9. Process according to one of Claims 1 to 6, characterised in that oxidizing agents are introduced in a mixture calculated to obtain a glass, the chemical composition of which is defined by the following weight limits: $SiO_2$: 52 to 58% - $Al_2O_3$: 12 to 16% - CaO and optionally MgO: 19 to 25% - $B_2O_3$: 4 to 8% - $F_2$: 0 to 1.5% - $R_2O$ (less than): 2% - $Fe_2O_3$ (less than): 1% - impurities (less than): 2%; the final glass further being able to contain manganese oxide, chromium oxide and/or cerium oxide coming from the said oxidizing agents.

10. Process according to Claim 9, characterised in that the mixture is calculated to obtain a glass of which the content by weight of manganese oxide, chromium oxide and/or cerium oxide can reach the value of approximately 3%.

11. Process according to one of Claims 7 to 10, characterised in that oxidizing agents are introduced in a mixture which comprises vitrifiable natural raw materials and glass fibres coming from production waste.

12. Process according to one of Claims 7 and 8, characterised in that the oxidizing agents are incorporated in a mixture of vitrifiable products comprising vitrifiable natural raw materials and cullet resulting from the grinding of glass packaging and/or glazings.